Europäisches Patentamt

European Patent Office

Office européen des brevets

(11) Numéro de publication: **0 342 578**
**A1**

# (12) DEMANDE DE BREVET EUROPEEN

(21) Numéro de dépôt: **89108731.4**

(22) Date de dépôt: **16.05.89**

(51) Int. Cl.⁴: **H02J 7/34**

(30) Priorité: **20.05.88 FR 8806796**

(43) Date de publication de la demande:
**23.11.89 Bulletin 89/47**

(84) Etats contractants désignés:
**DE FR GB**

(71) Demandeur: **PHOTOWATT INTERNATIONAL S.A.**
**65, Avenue du Mont Valérien**
**F-92500 Rueil Malmaison(FR)**

(72) Inventeur: **Canal, Bernard**
**49, rue Max Ernst**
**F-91440 Bures-Sur-Yvette(FR)**

(74) Mandataire: **Weinmiller, Jürgen et al**
**Lennéstrasse 9 Postfach 24**
**D-8133 Feldafing(DE)**

(54) **Régulateur de charge de batterie d'accumulateurs pour générateur photovoltaique.**

(57) Le régulateur de charge équipe un générateur photovoltaïque chargeant une batterie d'accumulateurs (30) et comportant des modules identiques (11, 12, 13, 14, 21, 22, 23, 24) qui regroupent en série des photopiles et qui sont eux mêmes assemblés par série de quatre dans deux branches parallèles (10, 20). Il comporte un interrupteur commandé (40, 50) par branche (10, 20) connecté en shunt sur l'un (11, 21) des modules de la branche considérée directement relié à l'une des bornes de la batterie d'accumulateurs (30) et des circuit de commande individuels (41, 51) des interrupteurs commandés (40, 50) qui sont sensibles à la tension de la batterie d'accumulateurs (30) et commandent les interrupteurs commandés (40, 50) de chaque branche (10, 20) à la fermeture lorsque la tension de la batterie d'accumulateurs (30) devient supérieure à un premier seuil de surcharge et à l'ouverture lorsque cette dernière tension devient inférieure à un deuxième seuil de sous charge inférieur ou égal au premier seuil.

FIG. 3

Xerox Copy Centre

## Régulateur de charge de batterie d'accumulateurs pour générateur photovoltaïque

La présente invention est relative aux générateurs photovoltaïques utilisant, comme moyens de stockage, des batteries d'accumulateurs dont le bon fonctionnement et la tenue des performances dans le temps résultent directement des conditions d'utilisation. Elle concerne plus particulièrement les régulateurs de charge de batterie d'accumulateurs employés avec les générateurs photovoltaïques pour empêcher les surcharges nuisant à la durée de vie des batteries d'accumulateurs.

Le champ photovoltaïque des générateurs photovoltaïques utilisant une batterie d'accumulateurs comme moyens de stockage d'énergie comporte une ou plusieurs branches connectées aux bornes de la batterie d'accumulateurs composées chacune de photopiles mises en série pour atteindre la tension de charge de la batterie d'accumulateurs avec une puissance débitée optimale, les photopiles étant elles mêmes regroupées au sein de chaque branche par modules de même puissance et de même tension. Les régulateurs de charge de batterie d'accumulateurs pour générateur photovoltaïque comportent, la plupart du temps, un interrupteur commandé intercalé en série entre la batterie d'accumulateurs et le champ photovoltaïque, et un circuit de commande de l'interrupteur commandé qui ouvre cet interrupteur commandé pour interrompre le courant de charge dès que la tension de la batterie d'accumulateurs dépasse un seuil haut, par exemple 2,35 volts par éléments d'une batterie d'accumulateurs au plomb et qui ferme cet interrupteur commandé pour rétablir le courant de charge dès que la tension de la batterie d'accumulateurs devient inférieure à un seuil bas, par exemple 2,15 volts par élément d'une batterie d'accumulateurs au plomb, l'écart entre les seuils haut et bas engendrant une hystérésis évitant un battement de l'interrupteur commandé.

La disposition de l'interrupteur commandé du régulateur de charge en série entre la batterie et l'ensemble des photopiles du champ photovoltaïque oblige à dimensionner l'interrupteur commandé pour laisser passer et couper toute la puissance délivrée par le champ photovoltaïque et a l'inconvénient d'introduire des pertes occasionnées par la chute de tension qui se développe aux bornes de l'interrupteur commandé lorsqu'il est passant.

La présente invention a pour but d'éviter ces inconvénients et de permettre une régulation au niveau de chaque branche du champ photovoltaïque qui ne dépend pas du nombre de modules de même puissance et de même tension tant que ceux-ci ne sont pas plus de quatre en série.

Elle a pour objet un régulateur de charge de batterie d'accumulateurs pour champ photovoltaïque comportant au moins une branche connectée aux bornes de la batterie d'accumulateurs et composée de photopiles mises en série pour atteindre la tension de charge de la batterie d'accumulateurs avec une puissance délivrée optimale. Ce régulateur comporte un interrupteur commandé par branche du champ photovoltaïque connecté en shunt sur une partie au moins des photopiles de la branche considérée de manière que les photopiles non shuntées développent une tension insuffisante pour la charge de la batterie d'accumulateurs, et des moyens de commande de l'interrupteur commandé de chaque branche qui sont sensibles à la tension aux bornes de la batterie d'accumulateurs et qui commandent l'interrupteur commandé placé dans chaque branche à la fermeture lorsque la tension aux bornes de la batterie d'accumulateurs devient supérieure à un premier seuil et à l'ouverture lorsque la tension aux bornes de la batterie d'accumulateurs devient inférieure à un deuxième seuil égal ou inférieur au premier seuil.

Les moyens de commande des interrupteurs commandés placés dans les branches du champ photovoltaïque sont avantageusement constitués d'un circuit individuel de commande par interrupteur commandé, les dispersions entre les caractéristiques des circuits individuels de commande ayant des conséquences favorables puisqu'elles permettent des mises en court-circuit et des mises hors court-circuit progressives des photopiles évitant à la batterie de subir des à-coups de charge.

Les photopiles de chaque branche du champ photovoltaïque sont en général regroupées en un, deux, trois ou quatre modules de même puissance et de même voltage mis en série. Dans ce cas, l'interrupteur commandé de chaque branche est avantageusement connecté en shunt sur l'un des modules directement relié à l'une des bornes de la batterie d'accumulateurs.

D'autres caractéristiques et avantages de l'invention ressortiront de la description ci-après de deux modes de réalisation donnés à titre d'exemple. Cette description sera faite en regard du dessin dans lequel :

- la figure 1 est un schéma synoptique d'un régulateur de charge selon l'invention équipant un générateur photovoltaïque constitué d'un ensemble de photopiles regroupées en un module, constituant le champ photovoltaïque, et d'une batterie d'accumulateurs,

- la figure 2 est un diagramme illustrant la caractéristique courant tension à éclairement de 1 kW/m$^2$ du module de photopiles du générateur photovoltaïque de la figure 1 et

- la figure 3 est un schéma synoptique d'un autre régulateur de charge selon l'invention équipant un générateur photovoltaïque comportant un champ photovoltaïque formé par des modules de photopiles regoupés en série dans des branches parallèles.

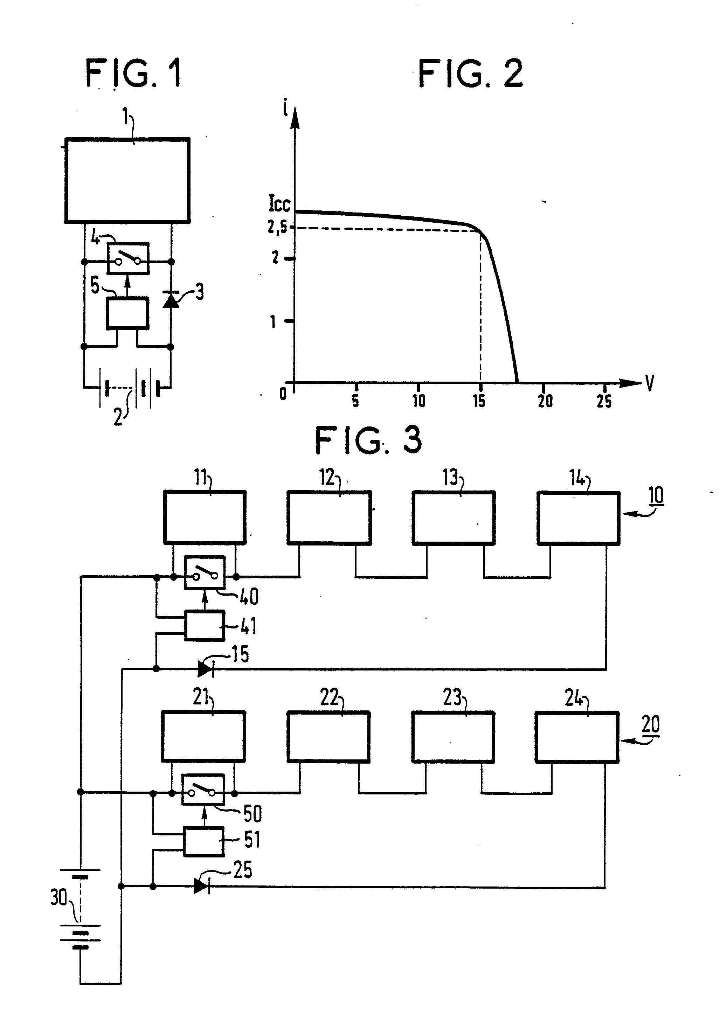

On distingue sur la figure 1 un champ photovoltaïque 1 qui charge une batterie d'accumulateurs au plomb 2 de 12 volts par l'intermédiaire d'une diode antiretour 3 et qui est équipé d'un régulateur de charge constitué d'un interrupteur commandé 4 connecté en shunt et d'un circuit de commande 5 de l'interrupteur commandé 4 sensible à la valeur de la tension de la batterie d'accumulateurs 2 qui l'alimente.

Le champ photovoltaïque 1 est constitué d'un module unique regroupant des photopiles mises en série pour atteindre la tension de charge d'une batterie d'accumulateurs de 12 volts avec une puissance optimale de 40 watts. Sa caractéristique courant tension à éclairage constant de 1 kW/m² représentée à la figure 2 montre qu'il développe une tension à vide de 18 volts suffisante pour la charge d'une batterie d'accumulateurs au plomb de 12 volts et qu'il peut fonctionner sans dommage en court-circuit car il présente un courant de court-circuit légèrement supérieur à son courant nominal conduisant à une puissance délivrée en court-circuit très faible.

La diode antiretour 3 évite à la batterie d'accumulateurs 2 de débiter dans le champ photovoltaïque 1 et d'être mise en court-circuit par l'interrupteur commandé 4.

L'interrupteur commandé 4 peut être un relais mais il peut aussi être un interrupteur à l'état solide tel qu'un transistor car il n'est pas nécessaire qu'il ait une très faible impédance à l'état passant puisqu'il n'est pas traversé par le courant de charge de la batterie d'accumulateurs. Ouvert il se présente comme une impédance élevée ne provoquant pas de chute de tension aux bornes du champ photovoltaïque 1 qui, en éclairement normal, développe une tension suffisante pour débloquer la diode antiretour 3 et fournir un courant de charge à la batterie d'accumulateurs. Fermé il court-circuite les bornes du module photovoltaïque 1 qui, en éclairement normal, délivre un courant de court-circuit sous une tension très faible incapable de contrer celle de la batterie d'accumulateurs 2 qui est protégée du court-circuit par la diode antiretour 3.

Le circuit de commande 5 de l'interrupteur commandé 4 est un détecteur à seuil sensible à la tension de la batterie d'accumulateurs 2 qui l'alimente. Il commande la fermeture de l'interrupteur commandé 4 pour interrompre la charge de la batterie d'accumulateurs 2 dès que la tension de cette dernière devient supérieure à un seuil haut de surcharge par exemple 13,9 volts correspondant à 2,35 volts par élément pour la batterie d'accumulateurs au plomb. Il commande l'ouverture de l'interrupteur commandé 4 pour rétablir le courant de charge de la batterie d'accumulateurs 2 dès que la tension de cette dernière devient inférieure à un seuil bas de charge par exemple 12,9 volts correspondant à 2,15 volts par élément pour la batterie d'accumulateurs au plomb. L'utilisation d'un seuil haut et d'un seuil bas distincts introduit une hystérésis évitant un battement de l'interrupteur commandé utile dans le cas où l'interrupteur commandé est un relais dont la longévité est liée au nombre de manoeuvres. Dans le cas où l'interrupteur commandé est un dispositif à l'état solide tel qu'un transistor dont la longévité n'est pas liée au nombre de manoeuvres on peut admettre des phénomènes de battements ce qui autorise à rapprocher et même à égaler les deux seuils haut et bas de tension.

La figure 3 illustre un régulateur de charge équipant un générateur photovoltaïque dont le champ photovoltaïque assure la charge d'une batterie d'accumulateurs au plomb 30 de 48 volts et comporte huit modules de photopiles 11, 12, 13, 14, 21, 22, 23, 24. Ces derniers développent chacun une puissance de 40 watts sous 12 volts à l'éclairement de 1 kW/m² et sont réparties par groupes de quatre en série dans deux branches 10, 20 connectées en parallèles sur les bornes de la batterie d'accumulateurs 30 par l'intermédiaire de deux diodes antiretour 15, 25. Ce régulateur de charge comporte un interrupteur commandé 40, 50 par branche 10, 20 du champ photovoltaïque, connecté en shunt sur le premier module 11, 21 de chaque branche 10, 20 directement relié au pôle positif de la batterie d'accumulateurs 30 et un circuit de commande individuel 41, 51 par interrupteur commandé 40, 50 connecté en entrée aux bornes de la batterie d'accumulateurs 30.

Chaque module de photopiles 11, 12, 13, 14, 21, 22, 23, 24 du champ photovoltaïque développe une puissance de 40 watts sous 12 volts à l'éclairement de 1 kW/m² et est identique à celui constituant le champ photovoltaïque de la figure 1 dont la caractéristique courant tension à l'éclairement de 1 kW/m² est représenté à la figure 2.

A quatre en série, ces modules de photopiles développent à vide une tension de 4 x 18 volts soit au total 72 volts ce qui représente une tension maximale de 3 volts par élément de la batterie d'accumulateurs au plomb de 48 volts qui est suffisante pour une charge complète. A trois en série, ils ne développent plus à vide qu'une tension de 3 x 18 volts soit au total 54 volts ce qui représente une tension maximale de 2,25 volts par élément de la batterie d'accumulateurs au plomb de 48 volts qui est insuffisante pour une charge complète. On peut ainsi réguler la charge de la batterie d'accumulateurs par une mise en court-circuit ou hors court-circuit de l'un des modules de chacune des branches 10, 20 du champ photovoltaïque.

Les diodes antiretour 15, 25 empêchent la batterie d'accumula teurs 30 de débiter dans les branches 10, 20 du champ photovoltaïque. Elles évitent aussi que l'une des branches 10, 20 du champ photovoltaïque puisse débiter dans l'autre.

Comme précédemment, les circuits de commande 41, 51 des interrupteurs commandés 40, 50 sont des détecteurs à seuil sensibles à la tension de la batterie d'accumulateurs 30 qui les alimente. Ils commandent, de la même manière, la fermeture des interrupteurs commandés 40, 50 lorsque la tension de la batterie d'accumulateurs 30 dépasse un seuil haut, par exemple 57 volts qui correspond à 2,35 volts par éléments de la batterie d'accumulateurs au plomb 30, et l'ouverture des interrupteurs commandés 40, 50 lorsque la tension de la batterie d'accumulateurs 30 devient inférieure à un seuil bas, par exemple 51 volts qui correspond à 2,15 volts par élément de la batterie d'accumulateurs au plomb 30. La dispersion entre les seuils des deux circuits de commande 41, 51 n'est pas gênante mais a des conséquences favorables puisqu'elle permet des mises en court-circuit et hors court-circuit progressives des photopiles, branche par branche du générateur photovoltaïque.

Dans la pratique, chaque module de photopiles 11, 12, 13, 14, 21, 22, 23, 24 est équipé d'une boîte de raccordement renfermant les connexions necessaires à son montage en série avec d'autres dans une branche du générateur photovoltaïque, le premier module 11, 22 d'une branche, directement raccordé aux bornes de la batterie d'accumulateurs 30 renfermant dans sa boîte de raccordement la diode antiretour 15, 25 ainsi que l'interrupteur commandé 40, 50 et son circuit individuel de commande 41, 51.

On peut, sans sortir du cadre de la présente invention modifier certaines dispositions ou remplacer certains moyens par des moyens équivalents. On peut notamment remplacer le circuit de commande individuel des interrupteurs commandés disposés dans chaque branche du générateur photovoltaïque par un circuit de commande centralisé placé au voisinage de la batterie d'accumulateurs et commandant à distance les interrupteurs commandés.

**Revendications**

1/ Régulateur de charge de batterie d'accumulateurs pour générateur photovoltaïque comportant un champ photovoltaïque constitué d'au moins une branche (10, 20) connectée aux bornes de la batterie d'accumulateurs (30) par l'intermédiaire d'une diode antiretour (15, 25) et composée de photopiles mises en série pour atteindre la tension de charge de la batterie d'accumulateurs avec une puissance débitée optimale caractérisé en ce qu'il comporte un interrupteur commandé (40, 50) par branche (10, 20) connecté en shunt sur une partie au moins des photopiles de la branche considérée (10, 20) de manière que les photopiles non shuntées développent une tension insuffisante pour la charge de la batterie d'accumulateurs et des moyens de commande (41, 51) de l'interrupteur commandé (40, 50) de chaque branche (10, 20) qui sont sensibles à la tension aux bornes de la batterie d'accumulateurs (30) et qui commandent l'interrupteur commandé (40, 50) placé dans chaque branche (10, 20) à la fermeture lorsque la tension aux bornes de la batterie d'accumulateurs (30) devient supérieure à un premier seuil et à l'ouverture lorsque la tension aux bornes de la batterie d'accumulateurs (30) devient inférieure à un deuxième seuil inférieur ou égal au premier seuil.

2/ Régulateur selon la revendication 1, caractérisé en ce que lesdits moyens de commande de l'interrupteur commandé de chaque branche (10, 20) comporte un circuit de commande (41, 51) individuel par interrupteur commandé, la diode antiretour (15, 25) étant disposée de façon que le circuit de commande continue à mesurer la tension de la batterie même quand l'interrupteur commandé est fermé.

3/ Régulateur selon la revendication 2, pour un générateur photovoltaïque dont les photopiles de chaque branche (10, 20) du champ photovoltaïque sont regroupées en au plus quatre modules (11, 12, 13, 14 ou 21, 22, 23, 24) de même puissance et de même voltage mis en série et équipés de boîtier de raccordement caractérisé en ce que l'interrupteur commandé (40, 50) de chaque branche est connecté en shunt sur l'un (11, 21) des modules de la branche consi dérée (10, 20) directement relié à l'une des bornes de la batterie d'accumulateurs (30) et en ce que ledit interrupteur commandé (40, 50), son circuit individuel de commande (41, 51) et la diode antiretour (15, 25) sont disposés dans la boîte de raccordement de ce dernier module (11, 21).

# FIG. 1

# FIG. 2

# FIG. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | EP-A-0051959 (EXXON RESEARCH & ENGINEERING CO.) * page 2, ligne 24 - page 4, ligne 32; figure 1 * | 1 | H02J7/34 |
| A | --- | 2, 3 | |
| Y | EP-A-0085947 (PHOTOWATT INTERNATIONAL SA) * page 1, ligne 15 - page 9, ligne 25; figures 1, 2 * | 1 | |
| A | --- | 2, 3 | |
| Y | EP-A-0027405 (COMMISSARIAT A L ENERGIE ATOMIQUE) * page 5, ligne 13 - page 6, ligne 33; figure 2 * | 1 | |
| A | --- FR-A-2592242 (MATRA SA) * page 7, ligne 29 - page 8, ligne 33; figures 1-4 * ----- | 1 | |

DOMAINES TECHNIQUES RECHERCHES (Int. Cl.4)

H02J
G05F

Le présent rapport a été établi pour toutes les revendications

| Lieu de la recherche | Date d'achèvement de la recherche | Examinateur |
|---|---|---|
| LA HAYE | 19 JUIN 1989 | FOURRICHON P.M.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P0402)